# EUROPEAN PATENT APPLICATION

(11) **EP 3 672 222 A1**
(43) Date of publication of application: **24.06.2020**
(21) Application number: 19425087.4
(22) Date of filing: 06.12.2019
(51) Int. Cl.: H04N 5/225, H04N 5/232, H04N 7/18, B60R 1/00, B60R 1/12

(54) **WIDE ANGLE FORWARD VIEW FOR A VEHICLE USING CAMERAS MOUNTED ON OR IN THE VEHICLE'S SIDE MIRRORS**

(30) Priority: 17.12.2018 IT 201800011182
(71) Applicant: Daviddi, Daniele, Assago (MI) (IT)
(72) Inventor: Daviddi, Daniele, Assago (MI) (IT)

(57) **Abstract**

The invention refers to a system for enlarging the visual part by the driver of motor vehicles. It is necessary to control the driver, through the use of video cameras (placed on both rear-view mirrors of the vehicle in the direction of the vehicle itself) and monitor / screens of what happens beyond his field of vision, which are normally however precluded.

The invention can be used to avoid a stationary vehicle in a double row in traffic condition, to overtake in total safety for themselves and the other road users by being able to see in advance and without invading the opposite lane the traffic condition in the direction of travel opposite the vehicle that wants to overtake or avoid a slower cyclist or motor vehicle than a roadside we would be impossible to see as an accident with tragic consequences.

## Description

### Field of technology:

The present invention relates to a visual extension (widening) system of vehicles, motorcycles, trucks and more generally all the vehicles used to transport people or goods. Using cameras and monitors, the invention allows the driver to acknowledge what happens beyond his view point, since visibility woutd normally be affected by the driver's seat fixed position, presence of obstacles and the internal pillars of the vehicle.

### Previous state of the technology:

There is no previous state.

The only similar technology are parking assistant cameras.

### Description:

The device consists in two cameras placed over the rear-view windows (one camera each) pointing towards vehicle's travel direction. The cameras, powered by the vehicle's battery, broadcast high quality images to the vehicle's dashboard via wiring or wireless technologies.

The device activates following the driver's preferences, here some examples:
- when using turn signals
- via vocal command
- manually: left only, right only, both and zoom.
- via cornering (activates the opposite camera of turning direction) This allows the driver to have a preventive vision of the vehicles approaching from opposite direction, stationary vehicles hidden behind a turn, at a roundabout or a crossroad; making up for the vehicle's front pillars visual obstruction which prevents the acknowledging of approaching vehicles.
   The device might integrates distance meters which allow the driver to overtake knowing the distance of the vehicle coming from the opposite way, these informations might also be accessible via an head-up display. The device might also integrates sensors to redirect the vehicle back into its lane if the passing is dangerous or even emergency auto-brake if needed.
   The cameras might also integrate night vision and, more generally, a quality vision for any weather condition.
   The cameras might be installed inside or outside the rear-windows (not altering the design nor the aerodynamic) or in any other extreme points of the vehicle. The cameras might also be fixed and visible or hidden and moved by driver's action. Considered the the cameras position, they will have a pressurised air or water cleaning system and an heating system to prevent freezing.

### Figures:

1. In this figure we see a typical situation in which the driver of the vehicle A, due to the presence of vehicle B, is unable to see both vehicle C approaching from opposite direction and vehicle D stationary at the roadside. Thanks to the device, the A vehicle's driver is now able to see vehicle C approaching and therefore wait the appropriate time to pass safely. Also he'll avoid impacting vehicle D which is in a dangerous position.
2. In this figure there's a situation requiring the cornering function of the device, which allows the A vehicle's driver to see vehicle B even if it's in a blind spot created by the front pillar of the car. This function might be used approaching dangerous crossroads, roundabouts and mountain's roads.
3. This figure shows the position of the device's cameras. They might be fixed on the exterior, hidden or even come out from the the mirror as needed.
4. and 5. Show the driver's view in a vehicle equipped with the device interfaced to the dashboard. The cameras' visuals might be improved by equipping the vehicle with prompted monitors beside the standard ones.

### Technology's use:

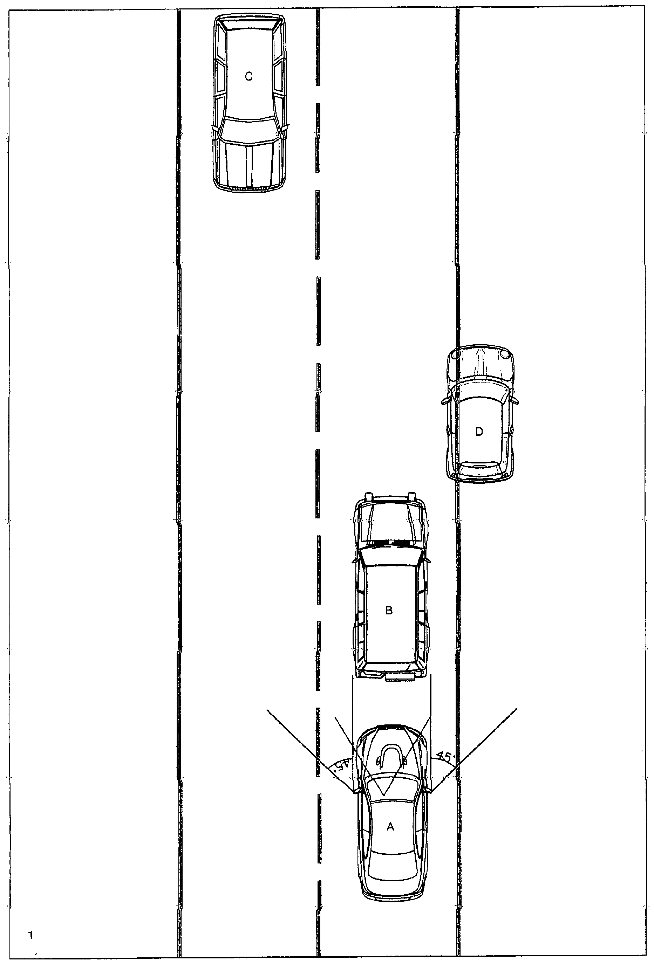

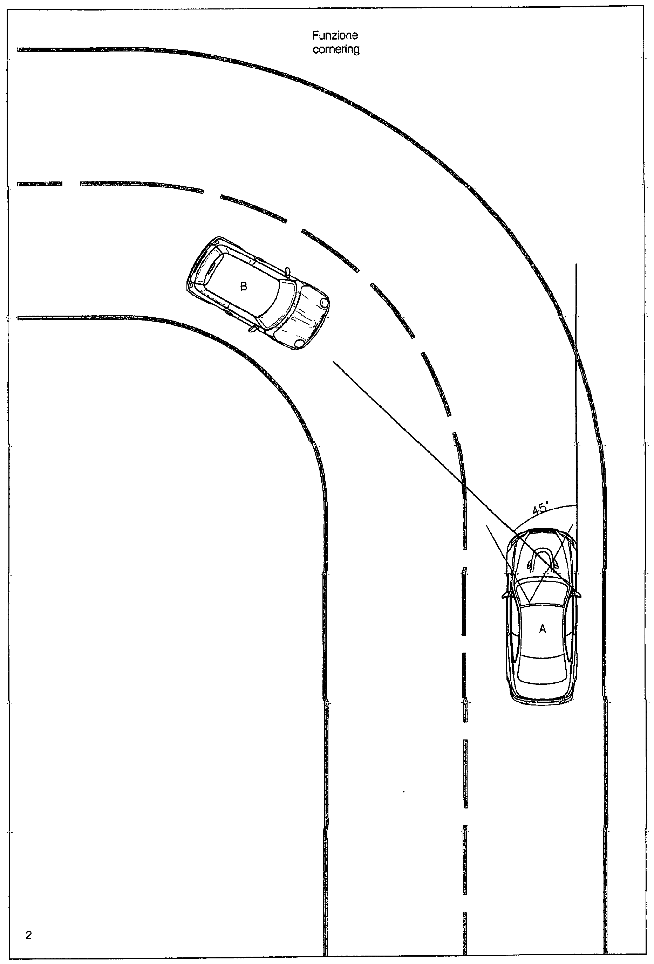

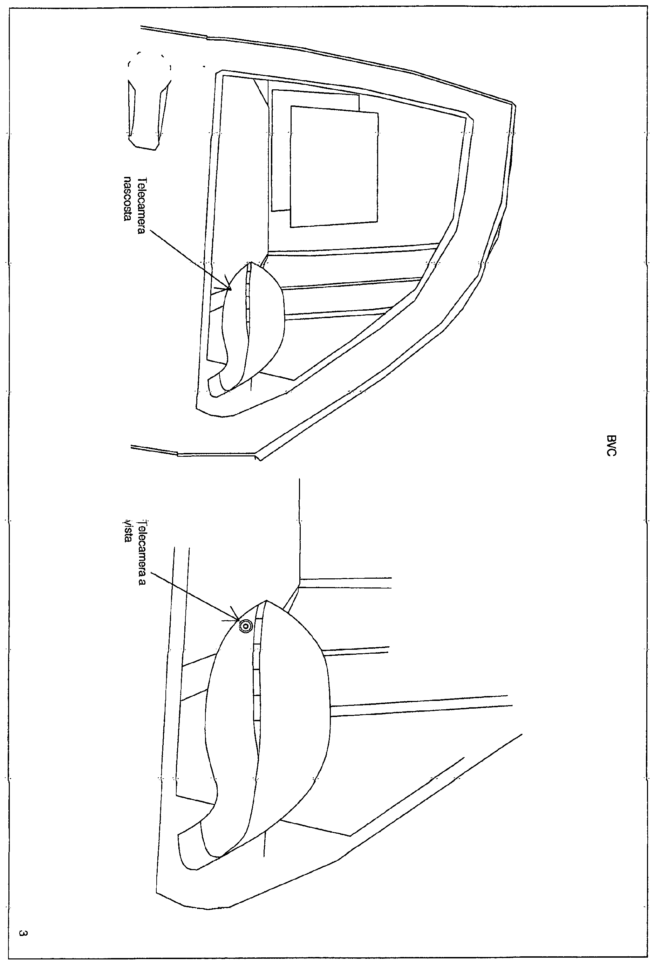

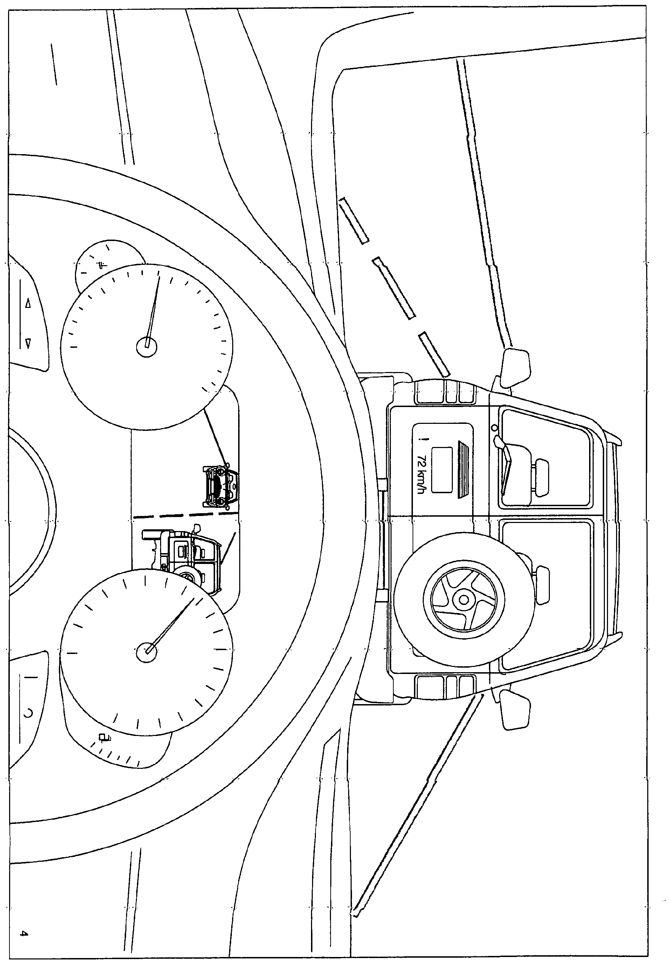

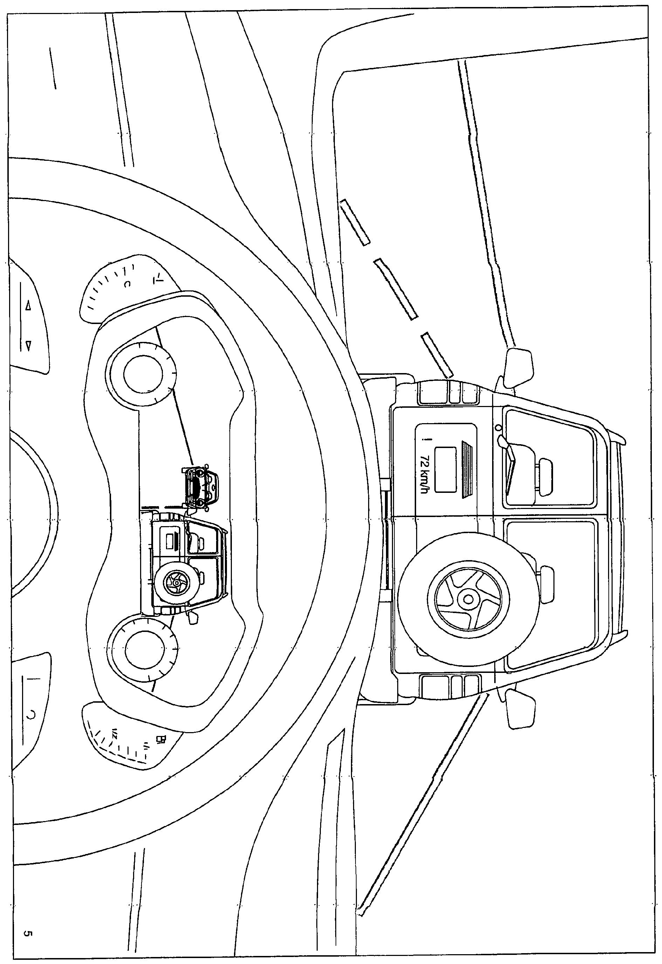

This invention might be used in order to avoid a stationing vehicle parked in double park (see vehicle D in figure 1) where, due to traffic, it would be impossible to see it in time and therefore avoid an abrupt braking, switching lane which might put other vehicles in danger or even an accident; It also might be useful to make a safe overtake (figure 1) since the device allows to see the traffic condition in the other lanes and the vehicle intended to be passed; The device might be used to prevent impact with a cyclist or a slower motorcycle at the roadside, both of which wouldn't be seen, avoiding an accident with tragic implications.

### Technical making:

Technically the invention might be built equipping (speaking of vehicle) a rear-view window with an HD camera casting images to the dashboard's monitor.

### Device's composition:

- HD Cameras
- Image Stabilizer
- Optical or digital zoom with 22° to 43° focus for a targeted view - Physical or touch controller
- Display with HD monitor integrated in the dashboard.

## Claims

1. Broad Vision Cameras, featuring High Quality cameras system, placed in or over the rear-view windows, pointing towards vehicle's travel direction.

2. Broad Vision Cameras, featuring an High Definition monitor in the vehicle dashboard which display the camera's captioning.

3. Broad Vision Cameras, featuring physical of vocal commands to use the device.
